# EUROPEAN PATENT APPLICATION

(11) **EP 3 875 893 A1**
(43) Date of publication of application: **08.09.2021**
(21) Application number: 21466002.9
(22) Date of filing: 01.03.2021
(51) Int. Cl.: G01B 11/24, G01B 11/245, G01M 17/02, B29D 30/06, B60C 25/00, G01B 3/02

(54) **METHOD AND DEVICE FOR CONTACTLESS MEASUREMENT OF GEOMETRIC OBJECTS**

(30) Priority: 02.03.2020 CZ 20202010
(71) Applicant: Trifid Automation, s.r.o., 811 03 Bratislava (SK)
(72) Inventor: Rusnák, Rudolf, 020 54 Lysá pod Makytou (CZ); Kacmárik, Ján, 841 05 Bratislava (CZ)
(74) Representative: Plicka, Josef

(57) **Abstract**

The method of contactless measurement of geometric properties of objects, especially raw tires (1) and drums (8) for tire production, consists in that the image of the object created on a contrasting background (2) is captured by a camera (6), thus obtaining contours in a defined coordinate system and in a series of sections of the object and subsequently the geometric properties of the object are evaluated. The device for contactless measurement of geometrical properties of objects, especially raw tires (1) and drums (8) for tire production, comprises a contrasting background (2) and at least one camera (6) having in its field of view the contour of the measured object, especially a raw tire (1) or drum (8) for the tire production. The contrasting background (2) is created either by an active surface illumination or by an indirect illumination of the bright surface, or by the use of a reflective material.

## Description

### Technical Field

The invention relates to a method for a contactless measurement of geometrical properties of objects, in particular for the contactless measurement of geometric properties of a raw (green) tire on a tire building machine and the contactless measurement of geometric properties of a drum on tire building machine, which allows an immediate assessment of quality parameters of the tire, for example deviations from the ideal circular shape, measurement of radial and axial tire run-out, symmetry measurement, profile control, bubble detection, and which further allows an indirect inspection of joints, the adherence to a proper operator workflow, and the adherence to a proper machine adjustment; The present invention further relates to an apparatus for carrying out this method.

### Background Art

A motor vehicle tire consists of approximately 8 to 15 rubber blanks (semi-finished products). A tire manufacture is a complex process in which various rubber semi-finished products are folded, wound, centred, joined, inflated, pressed and rolled to the final form of a raw tire.

The tire building machine is a device on which the production process takes place, consisting mainly of assembling individual rubber semi-finished products up to the state of production of the raw tire. Tire building machines are divided into single-stage and multi-stage machines, depending on the number of tire building drums that the machine contains. The rubber blanks are usually fed to the individual drums by means of a system of conveyors, so-called feeders. The material enters the feeders usually from cassette bins, where the semi-finished products are wound at the same time as the separating wrapping material, or loaded from various other handling devices or bins.

The feeders can be of the type of simple conveyors with manual adjustment of the semi-finished product guidance up to fully automatically adjustable, including automatic centring the semi-finished product together with measuring and cutting the required length of the semi-finished product. The tire building machines equipped with automatic feeders usually place selected semi-finished products on the tire building drum at the same time in an automatic mode.

It is generally known that the quality of a tire depends significantly on the accuracy of the assembly of the individual blanks and the correct distribution of the joints of the rubber blanks around the circumference of the tire. Deviations in the preparation of semi-finished products in combination with deviations in folding or production of a raw tire on a tire building machine are ultimately reflected mainly in the radial deviation from roundness to the centre and the lateral deviation, or in the deviation from the ideal profile. These parameters are collectively included in the term "Uniformity of a raw tire", and we will continue to use this term in the text of the application of the present invention.

There is a high correlation between the uniformity of the raw tire and the tire after compression. This means that the tire with a poor uniformity of a raw tire from a tire building machine will show poor uniformity even after vulcanization. It follows that it is highly desirable to carry out thorough inspections and measurements of the geometrical properties of the raw tires as well as the geometrical properties of the tire building drums on the tire building machine on which the raw tires are mounted during the production process.

The inspection and measurement of geometric properties of these objects is currently usually performed by a manual measurement of individual geometric quantities, while the measurement and inspection process represents unproductive times of the production line. Therefore, there is often an effort on the part of the operator of these machines to minimize the measurement of the geometric parameters and the control of other deficiencies. This is also because there is currently no measuring system available that would not slow down the production process and reduce overall labour productivity. The operator therefore focuses more only on visual inspection of external defects and deficiencies.

The measurement is thus moved to operations that are related to the adjustment of the machines, i.e. to the change of the produced dimensions of the tires, or to the time of the end or beginning of the shift. In this case, the circumference of the tire and its width are measured mechanically and compared with the prescribed data of tire dimensions in the recipe according to the production documentation, including the prescribed tolerances of the circumference and the width of the crown of the manufactured tire. The accuracy of such a measurement is low and depends to a large extent on the operator, its care and ability.

Portable measuring systems, which operate on the principle of the triangulation method, where a Class 3R laser is used as the light source, are also sometimes used to measure the uniformity of raw tires. None of these systems is usually part of the production machine and these systems are additional devices that require proper adjustment before the start of measurement, which is performed separately and thus limits the productivity of the production machine both at the time of measurement, but also during the assembly and disassembly of the entire additional measuring device. A powerful laser poses a risk of damage to the operator's vision.

### Summary of the Invention

The subject matter of the method of the contactless measurement of geometric properties of objects, especially raw tires and drums for tire production, consists in that the image of the object created on a contrasting background is captured by a camera, thus obtaining contours in a defined coordinate system and in a series of sections of the object and subsequently the geometric properties of the object are evaluated.

The contrasting background is created either by an active surface lighting or indirect lighting of a bright surface, or by using a reflective material.

The contour points of the object are obtained either in the absolute coordinate system, i.e. in the system of x-, y- and z-axes, which are based on the reference mark, or in the coordinate system determined by the x-axis, radius r and angle alpha, where the x-axis is identical with the axis of rotation of the object in the geometric centre of the object.

The individual points of the object contour are obtained in numbers that represent two to the nth multiple, while the magnitude of the distance between the individual sections is half that of the smallest sought error of the measured object.

The subject matter of the device for contactless measurement of geometrical properties of objects, especially raw tires and drums for tire production lies in that it comprises a contrasting background and at least one camera having in its field of view the contour of the measured object, especially the raw tire or drum for tire production.

The contrasting background is preferably provided with a planar light source. The contrasting background may be an indirectly illuminated bright surface or a surface of reflective material. In the case of an indirectly illuminated light area, it is advantageous for the contrasting background to be formed by at least two illumination segments, the individual illumination segments being arranged in the contrasting background separately and pivotally attached about their longitudinal axis.

The outline of the measured object is stored in the field of view of the camera between the camera and the contrasting background. At least one reference mark is placed on the contrasting background, which together with the contour of the object, in particular the raw tire or the drum of the tire building machine, is in the field of view of the at least one camera. Multiple reference marks can create a calibration ruler that is placed on a contrasting background.

The invention provides rapid sensing of individual points of the contour shape of an object, such as a raw tire on a drum of the tire building machine, by optimally positioning the camera block, backlight and reference ruler so that the tire contour and reference ruler are in the field of view of one or more cameras simultaneously.

The invention extends the possibilities of measuring the uniformity of a raw tire directly on a tire building machine in an absolute and relative coordinate system, without affecting the working cycle time of the production machine.

It is advantageous that in one measurement according to the invention it is possible to measure uniformity values in an absolute coordinate system, i.e. with respect to the centre of the object, for example the drum of a tire-making machine or the raw tire itself, i.e. in the x-, y- and z-axes, or in determining the x-axis, the radius r and the corresponding angle alpha, which are based on the reference mark of the calibration ruler located on the floor and at the same time in the relative coordinate system, i.e. the x-axis, the radius r and of the angle of rotation alpha, which are derived from automatic detection of the centre groove or protrusion in the centre of the object contours, for example of a raw tires or other parts of the raw tire.

The main advantage of this method lies in the speed of measurement without any extension of the working cycle of the machine, because the measurement of the basic geometric properties takes place simultaneously with the production process, or its last stage. All measurement results are thus available already at the end of the production of the object, for example the raw tire, namely after the end of the last revolution of the stitching cycle. Once the tire has been removed from the tire building machine, data on the uniformity of the raw tire produced, including the calculated harmonics, are already available, resulting in a significant reduction in the number of scrap in the production of raw tires. Another benefit is the fact that the invention is able to provide real-time measurement results based on a "machine assessment" of the quality of a raw tire, which is an indispensable advantage in further automating the production process, leading to production without an operator.

It is a very simple and reliable measurement, easily applicable to most currently used tire building machines. Both the measuring method and the apparatus for carrying out this method utilize the geometric phenomenon of the perpendicularity of the tangent to the radius of a circular object, such as a raw tire, which results in fast measurements without the need for complicated adjustment of the device.

The presence of the outline of an object, such as a raw tire and a reference ruler, which is mounted on the floor, allows at the same time on each camera image to automatically correct any camera shake and verify its correct position. This achieves complete reliability of the measurement results.

The advantage of using an illuminated background on the floor is the insensitivity of the measurement to changes in the position of the light in the order of tens of mm.

The advantage of this method is also the dependence of the measuring accuracy of the contour of the object, such as a raw tire, only on the camera position and not on the illuminated background, wherein the camera stability can be checked based on the position of the reference ruler and the measurement result can be corrected by determining the position deviation and the angle of the reference ruler from the position in the calibration time.

The measurement method of the invention ensures the measurement and determination of complex geometric properties of an object, including radial and axial run-out, roundness and circumferential size in individual tracks of the object, such as a raw tire. The method according to the invention also captures all surface defects of the object, including the shape of the joints and waves on the body of the object and any unevenness in the mass distribution of the manufactured object. Based on these results, it is possible to well identify the steps in which deviations from the prescribed geometric properties of the object, such as raw tires, have occurred.

From the calculated harmonics it is possible to assess which effects during production are random and which are systematically repeated. Machine settings are related to a very high degree of systematic error correlation.

### Brief Description of the Drawings

The subject matter of the invention is shown in an exemplary embodiment in the accompanying drawings, in which
Figure 1 shows a schematic view of the principle of contactless measurement of geometric properties of an object with a contrasting background,
Figure 2 shows schematically the principle of a method of contactless measurement of geometric properties of an object with a contrasting background,
Figure 3 shows a schematic view of the principle of the contactless measurement of geometric properties of an object with a passive background on a floor,
Figure 4 shows a schematic principle of the method of contactless measurement of geometric properties of an object with a passive background on the floor according to Figure3 in the plan view,

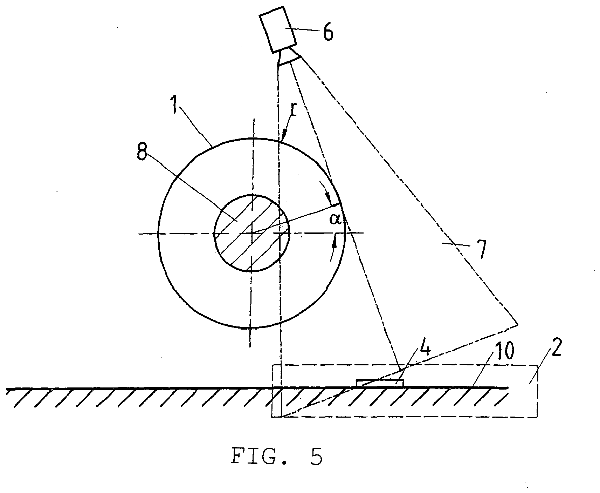

Figure 5 shows a schematic view of the principle of the contactless measurement of geometric properties of an object with a passive background on a floor when using several cameras located side by side,
Figure 6 shows schematically the principle of contactless measurement of geometric properties of an object with a passive background on the floor when using several cameras located side by side according to Figure 5 in the plan view,
Figure 7 shows schematically a view of the principle of contactless measurement of geometric properties of an object with a passive background on the floor when using several cameras located side by side,
Figure 8 shows schematically the principle of contactless measurement of geometric properties of an object with passive background on the floor when using several cameras in a row according to Figure 7 in the plan view,

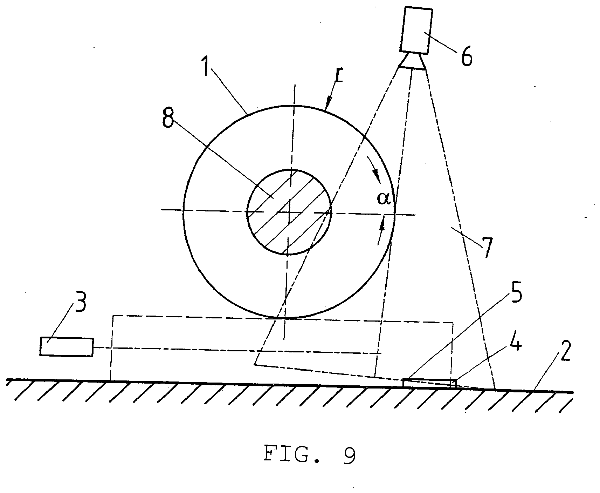

Figure 9 shows a schematic view of the principle of contactless measurement of geometric properties of an object with a passive background on the floor, including placement of a light source,

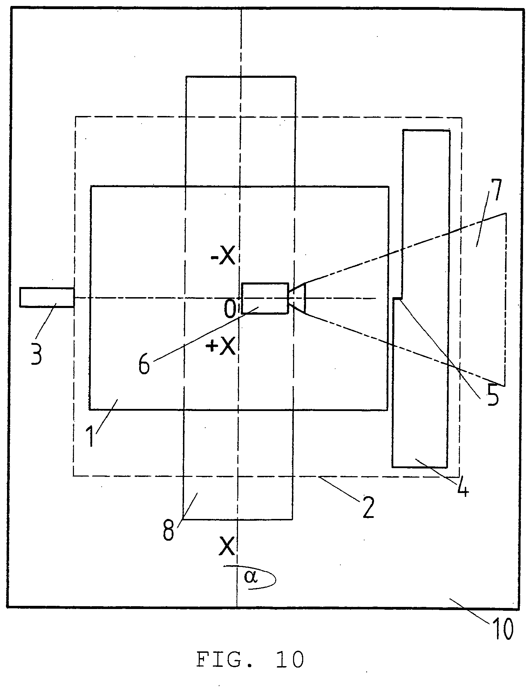

Figure 10 shows schematically the principle of contactless measuring the geometrical properties of an object with a passive background on the floor, including the location of the light source according to Figure 9 in the plan view,

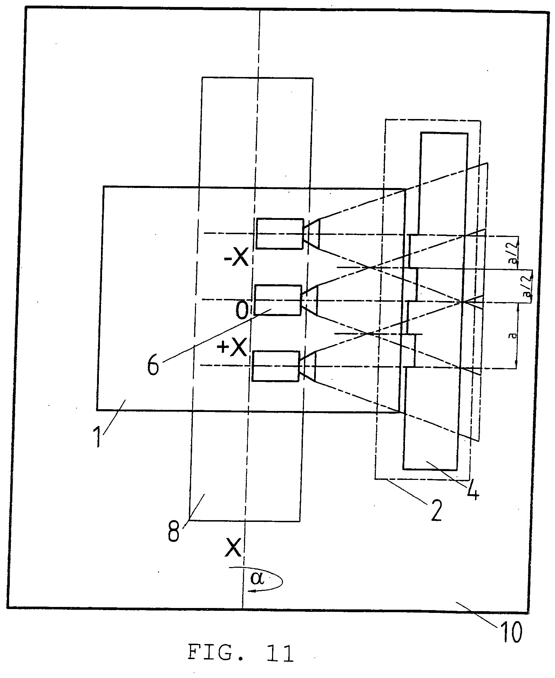

Figure 11 shows the calibration ruler and its relation to the drum centre and optical axes of the cameras,

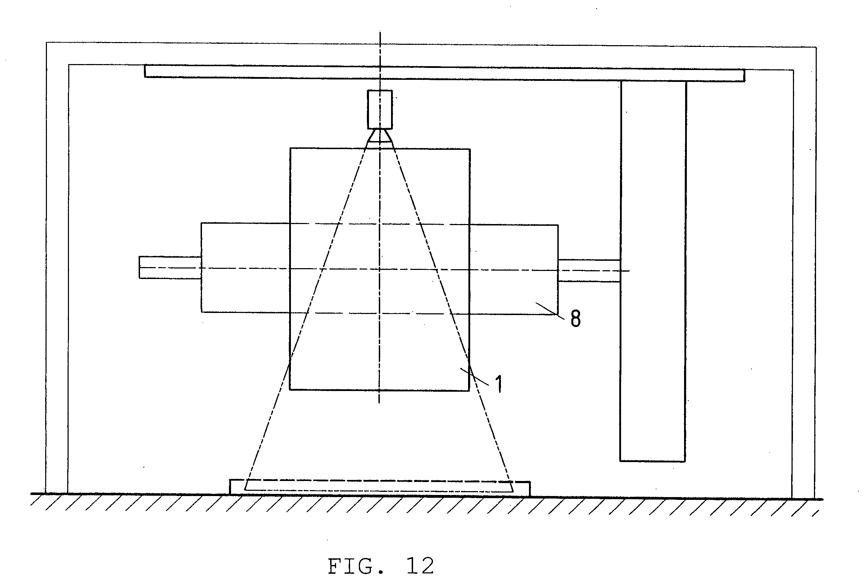

Figure 12 shows schematically the device according to the invention, where the measured objects on the production machine are transported from above and the contrasting background is placed on the floor,

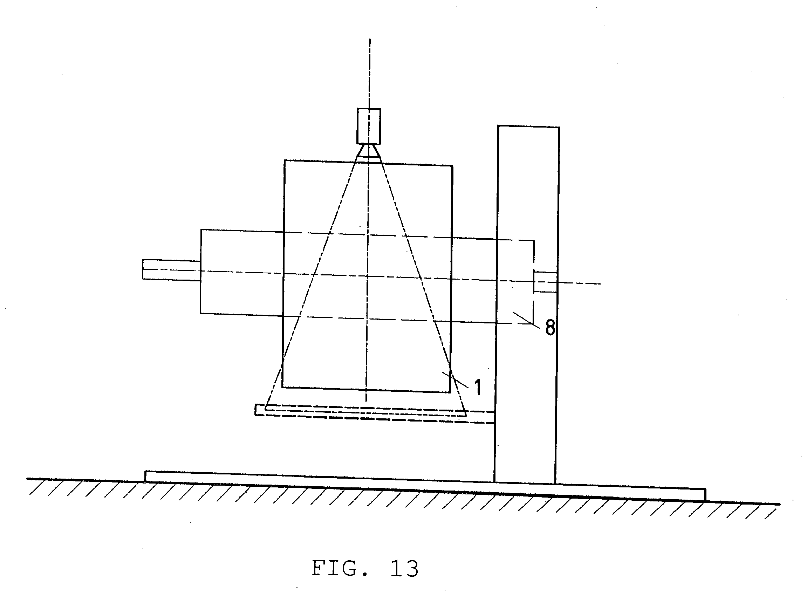

Figure 13 shows schematically the device according to the invention, where the measured objects are transported to the production machine on the floor and the contrasting background is placed on the production machine, and
Figure 14 shows a real example of evaluation of profiles around the circumference of the tire.

### Detailed Description of the Invention

The method of contactless measurement of geometric properties of an object according to the invention as well as the device for carrying out this method can be used for measuring geometric properties of a number of types of objects and not only rotational shapes. An exemplary embodiment of the invention is further described in detail in the context of a specific embodiment on a production plant that produces raw tires.

The method of contactless measurement of the geometrical properties of a raw tire on a tire building machine according to the invention is based on the principle that the tire contour formed on an illuminated background is scanned together with at least one reference mark placed on a ruler by at least one camera. In this way, the values of the geometric properties of the raw tire are obtained in the absolute coordinate system of x-, y-, z-axes or x-axis, r, and the corresponding angle alpha to the centre of the tire, based on the reference mark of the calibration ruler located in the background. At the same time, the uniformity values of the raw tire in the relative coordinate system of the x-axis, radius r, and the angle of rotation alpha are obtained, which are derived from the automatic detection of a reference mark, which can be, for example, a central protrusion. The reference mark defines the zero point on the x-axis in the camera image.

The geometrical properties of a tire, also sometimes referred to as tire uniformity, are considered to be, in particular, the radial deviations from the roundness to the centre and the lateral deviations of the produced raw tire, determined by comparing .the measured profiles of the manufactured raw tire with the prescribed pattern.

In some cases, measurements are made against the centre groove or against the nose of the tire itself. All measurements are evaluated so that the centre of the x-axis is identical with the geometric centre of the drum, or so that the centre of the x-axis is identical with the position of the groove or nose on the tire itself. This procedure is usually used to evaluate the shape of a tire by comparison with a model shape. By processing the scanned image, the resulting files in both mentioned coordinate systems can be generated simultaneously.

The measurement of the geometrical properties of a raw tire can be performed in any production operation. Usually, the measurement is performed only during the final operations, at some of the last revolutions of the drum, when the shape of the raw tire is already stable. The image of the object created on a contrasting background is captured by a camera, which obtains the individual contour points of the real raw tire in a defined coordinate system and in a series of their sections, which are then evaluated. The measured geometric properties of the raw, namely the diameter, width and run-out, are compared with a manufacturing instruction that represents the ideal geometric parameters of the raw tire. The section of an object can be defined as an outline at one specific angular rotation.

The whole process begins with the creation of a contrasting background, which can be formed mainly by active surface lighting, indirect illumination of the light area or the use of a reflective material. The manufacturing instruction usually determines the sequences in which the raw tire is to be measured. After measuring the individual contour points, the measured information is processed, the measured contours are created from the individual points in the selected tracks, and these are compared with the ideal shape of the raw tire and the permitted geometric tolerances.

The measurement is performed in the absolute coordinate system of the x, y, z-axes, which are based on the reference mark, or in the coordinate system determined by the x-axis, radius r and an angle alpha, where the x-axis is identical with the axis of rotation of the object with zero value in the geometric centre of the object.

The number of points at which the contour is measured at one particular angular rotation of the object depends mainly on the resolution of the cameras used and the rubber environment, which usually works in 0.1 mm steps in the x-axis direction.

At the beginning of the measurement, the position of the reference mark, which may be a protrusion, hole, notch or other structure, in the camera image is checked. The reference mark is placed on the floor, on a contrasting background or part of the production machine so that it is in a fixed position relative to the centre of the axis of rotation x, ideally to minimize the risk of changing its position relative to the centre of the axis of the drum rotation, for whatever reason. A part of the camera calibration is storing the position of this reference mark and/or more reference marks in the image. This means that if there is an undesired change in the position, such as shifting or rotating the camera, or changing optical parameters, such as changing the focus of the lens, the reference marks will be in other, i.e. shifted places in the camera image, which can be clearly detected camera image processing. This check must be carried out before the start of each measurement.

The cameras are connected to evaluation electronics, which digitally process the image images from the camera and create a set of measured values. It is advantageous if this electronics also receive information about the specific position of rotation of the tire building drum, in which the individual image images were obtained, either directly from the machine or using a supplemented independent incremental sensor on the axis of the tire building drum.

In the case of a tire, an identification bar code is affixed to it in the zero position, which remains on the tire during the entire life cycle of the tire. On production machines where there is angular position information, the first measurement is made at this point and the next measurement is shifted by a defined angular rotation in a clockwise direction so as to obtain a preselected number of measurements evenly distributed around the tire circumference. Assigning a specific measurement to a specific position is extremely important when analyzing possible causes of uniformity mismatch, i.e. the geometric properties of the tire. Routine quality assessment is possible even without knowing the position of rotation, as long as the object rotates at a known speed. However, in such a case, it is more difficult to determine the actual position of the detected defects on the tire surface.

The number of circumferential measurements of the tire is selectable in multiples of 2ⁿ, so that the number of circumferential measurements can be, for example, 64, 128, 256 or 512 measurements as needed to calculate individual harmonics from the measured signals using FFT "Fast Fourier Transformation". Usually the calculation up to the 16^{th} harmonic is used. The description of the meaning of individual harmonic frequencies and its connection, i.e. the correlation with the properties of the tire, is not the subject of the present invention. The size of the distance between individual sections is half the size of the smallest sought error of the measured object.

That is, if the size of the object to be searched on the tire surface is, for example, 10 mm, then the number of measurements must be chosen so that there is at least one measurement for every 5 mm of inspected surface, which in this particular case is the circumference of the tire. It is also possible to proceed by calculating the circumference of the tire in millimetres, dividing by five and then selecting the next higher number 2n. For example, with a tire circumference of 1,800 mm, after dividing by five we get the number 360 and the nearest number 2n is 512, so 512 measurements will be made.

When a deviation that exceeds the allowable tolerance is found, its value and the exact location of the deviation are displayed on the operator's screen, and the operator decides how the specific geometric deviation will be handled. Of course, this is only possible if the angular position of the defect is also measured. If this were not the case, only the deviation value would be displayed without reference to a specific location on the tires. If the deviation exceeds the permissible tolerance, the automatic cycle of the production machine must be interrupted and the operator must assess whether the defect is repairable or not and take measures to ensure that the defect does not recur.

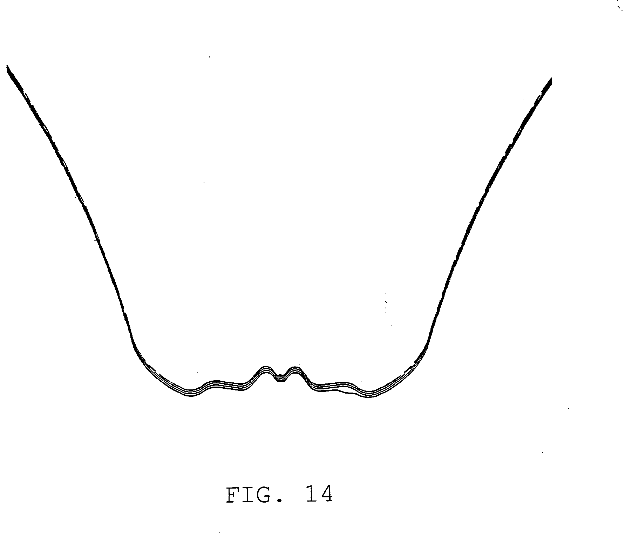

An actual example of the evaluation of the measured profiles around the circumference of the tire is shown in Figure 14. It plots all the measured profiles of the particular tire in a single figure over each other. In the case of an ideal tire, all profiles should be the same and the evaluation should therefore be a single profile. Deviation of only one profile means a local deformation of the surface, such as a bubble.

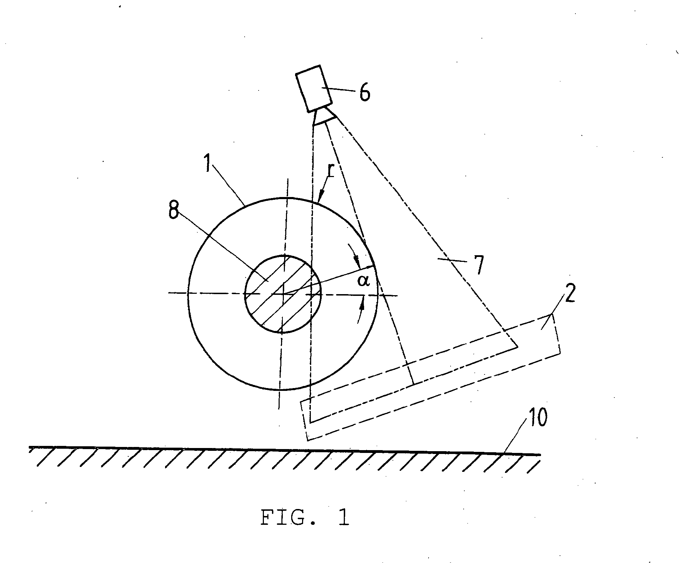

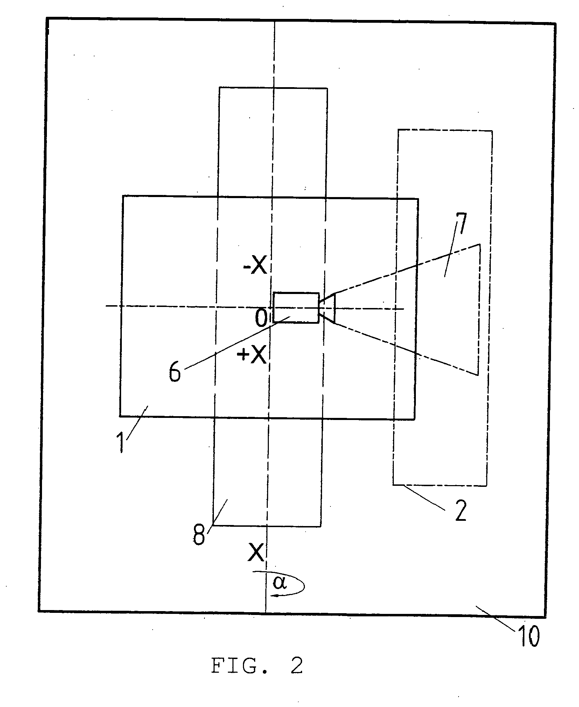

The device for contactless measurement of the geometrical properties of a raw tire or drum on a raw tire production machine is preferably part of a raw tire production machine 9. The principle of the device is shown in Figures 1 and 2. A contrasting background 2 is placed on the tire building machine 9. If this is not possible or if it is not advantageous, the contrasting background 2 can be placed on the floor 10 on which the tire building machine 9 is placed. According to the invention, it is possible for the contrasting background 2 to be placed above the production machine. In the vicinity of the tire building machine 9, at least one camera 6 is further mounted separately, i.e. separately from the tire building machine 9, which is positioned so as to have the contour of the raw tire 1 or the contour of the drum 8 in its field of view against a contrasting background 2.

It follows that the described device can be used not only for measuring the geometrical properties of the raw tires 1, but also for measuring the geometrical properties of the drums 8 of the tire building machine 9 on which the raw tires 1 are mounted during the production process. The use of measuring the geometric properties of the drum 8 of the tire building machine 9 occurs mainly before the first operation at the beginning of the production cycle of another tire, which allows to immediately measure its diameter, assess deviations from the ideal circular shape and thus control the return of individual segments production of the previous type of raw tire.

The contrasting background 2 can be designed as an active means, i.e. it can be provided with surface lighting, or as a passive means, i.e. with indirect lighting on the floor 10, formed by a line or point light source 3. Another variant is to create a contrasting background 2 with the use of a reflective material, for which normal ambient lighting is usually sufficient to obtain a sufficient contrasting background.

It is important that the contrasting background 2 is illuminated evenly, so it is advantageous for it to be formed by a series of linear light sources. The individual line light sources can be arranged at different angles to the reference surface to achieve the homogeneous illumination from the camera 6 point of view. The individual line light sources enable the segmentation of the lighting by gradually switching on the individual line segments according to the specific diameter of the manufactured tire and the required degree of contrast. Infrared lighting can also be used, preferably with a wavelength of 850 micrometers, so that the operator is not bothered when switching the lighting on and off.

The contrasting background 2 comprises at least one reference mark 5, optionally comprising a calibrated ruler 4 with a series of reference marks 5.

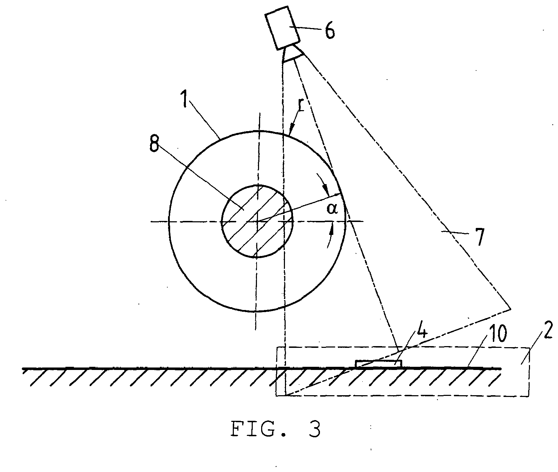

The camera 6 for sensing the contour of the raw tire 1 is preferably mounted above the drum 8 of the tire building machine 9 so that in its field of view 7 appears the contour of the raw tire 1 against an illuminated contrasting background 2, as shown, for example, in Figure 3. The camera 6 is preferably carried by its own construction, so that certain movements of the camera 6 with respect to the contour of the measured raw tire 1 can be expected. Therefore, before each measurement, the position of the camera 6 in relation to the coordinate system is checked by measuring the position of the reference mark 5 and comparing this position with the set tolerances. The coordinate system of the camera 6 must be in the corresponding position in relation to the reference mark 5. If a deviation occurs, the camera 6 must be recalibrated to verify the system.

Calibration is generally performed by placing a special calibration jig on the drum 8 of the tire building machine 9, the dimensions of which are known and are precisely measured and stated in the measurement protocol of the calibration jig. The drum 8 with the calibration jig is rotated so that the calibration jig is in the image of the camera 6. Subsequently, the position of the camera is checked to see the reference mark 5 and the whole profile of the calibration jig in the image of the camera 6. Subsequently, the settings of the optical parameters of image capture, especially the aperture and focus, are verified. Calibration images are then taken, from which calibration files are created so that the resulting measured values correspond to the known values of the calibration jig.

In the case where several cameras 6 are used for the measurement, at least one of the cameras 6 is placed above the drum 8 of the tire building machine 9 so that the camera in its field of view 7 simultaneously has both the contour of the raw tire 1 and the reference mark 5 preferably in a raster design placed directly on the calibration ruler 4. The calibration ruler 4 plays an important role in defining the absolute coordinate system of the measurement results.

In the case of tires, the geometric centre of the drum 8 is most often used as the centre of the absolute coordinate system. This centre is neither visible nor accessible during the measurements. Therefore, we use the calibration ruler 4 with at least one reference mark 5 as an aid. The calibration ruler 4 is located so that we see it in the image of the measuring camera 6, and at the same time its position is known and constant, i.e. unchanged with respect to the selected centre of the absolute coordinate system. This arrangement makes it possible to display the centre of the absolute coordinate system together with the dividing centre plane in the measured contour on the circumference of the tire. The calibration ruler 4 can have different shapes and usually more than one reference mark 5. The use of several reference marks 5 increases the robustness of the system. The shape of the calibration ruler 4 can be affected by the number of cameras 6 used and design constraints on the machine. In the case of tires, the typical position of the calibration ruler 4 is such that one of its reference marks 5 lies in a plane passing through the geometric centre of the drum 8 and is perpendicular to the axis of rotation of this drum 8, the distance of the reference mark 5 from the centre of the drum 8 being affected by the maximum diameter of the tire so as to be in the image of the camera 6, but so that it is not obscured by the tire in the image of the camera 6. The shape of the calibration rulers 4 and the number of reference marks 5 can also cover the ranges for several cameras 6.

For the measurement according to the invention, several cameras 6 are used in cases where it is necessary to proceed with a substantially more accurate measurement or in cases where the geometrical properties of extremely large raw tires 1 are measured.

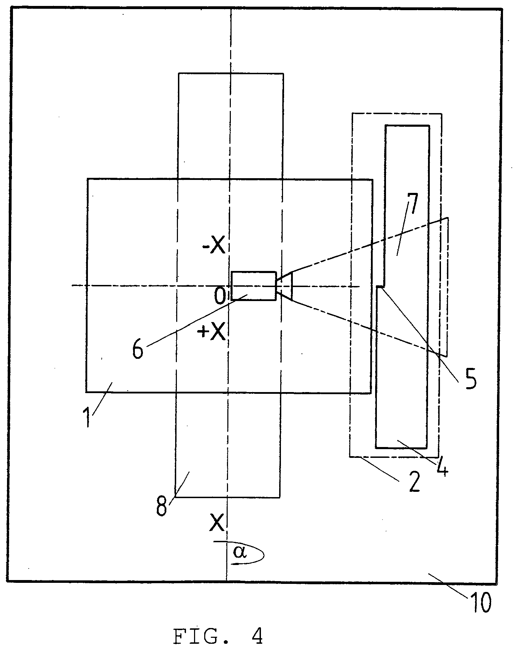

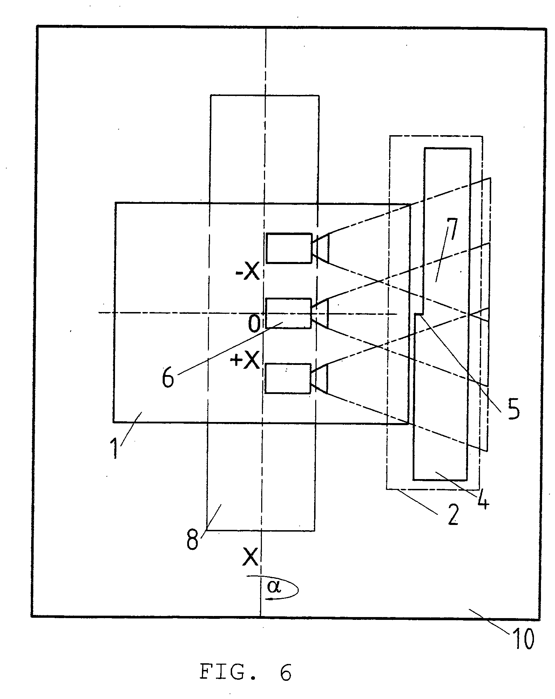

Figures 4 and 6 show the use of a larger number of cameras 6 due to the need for a more accurate measurement of the raw tire 1 or drum 8, the width of which is extraordinary.

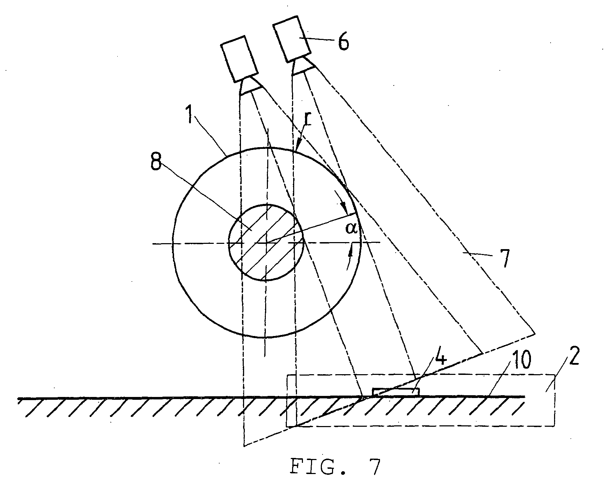

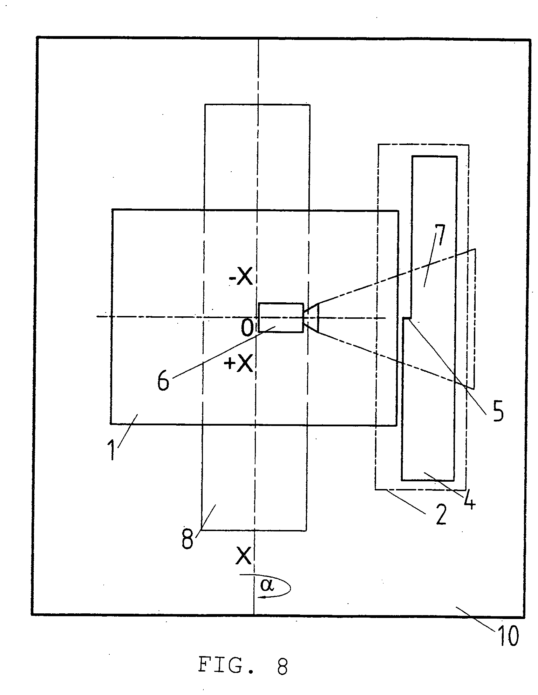

Similarly, Figures 7 and 8 show the use of several cameras 6 due to the need to measure the raw tire 1 or the drum 8, the diameter of which is extraordinary, so that adjusting the cameras 6 would be difficult and time consuming.

### Industrial Applicability

The invention can be used in particular for the contactless measurement of geometrical properties of objects, especially rotational shape, for example for the contactless measurement of geometric properties of a raw tire on a tire building machine and the contactless measurement of geometric properties of a drum on a tire building machine, for the immediate assessment of quality parameters of a produced raw tire, for example, a deviation from an ideal circular shape, for the measurement of radial and axial run-out, for the measurement of symmetry, detection of bubbles, control of contour shape, i.e. profile, for the control of joints, observance of the correct working procedure of the operator and observance of the correct adjustment of the machine. The invention can also be used in the automotive or aerospace industries.

### List of Reference Marks

- 1: - raw tire
- 2: - contrasting background
- 3: - light source
- 4: - calibration ruler
- 5: - reference mark
- 6: - camera
- 7: - field of view
- 8: - drum
- 9: - tire building machine
- 10: - floor

## Claims

1. A method for a contactless measurement of geometric objects, in particular raw tires and drums for tire production, **characterized in that** the image of the object formed on a contrasting background is captured by a camera, thereby obtaining object contours in a defined coordinate system and a series of object sections geometric properties of the object.

2. The method for the contactless measurement of geometric objects, in particular raw tires and drums for the production of tires according to claim 1, **characterized in that** the contrasting background is formed by an active surface lighting.

3. The method for the contactless measurement of geometric objects, in particular raw tires and drums for the production of tires according to claim 1, **characterized in that** the contrasting background is formed by an indirect illumination of the bright surface.

4. The method for the contactless measurement of geometric objects, in particular raw tires and drums for the production of tires according to claim 1, **characterized in that** the contrasting background is formed by using a reflective material.

5. The method for the contactless measurement of geometric objects, in particular raw tires and drums for the tire production according to claim 1, **characterized in that** the defined coordinate system is either an absolute x, y, z coordinate system based on a reference mark, and / or a cylindrical coordinate system x, radius r and the angle of rotation alpha to the centre of the object, which is indirectly determined in the camera image by at least one reference mark, the x-axis being identical to the axis of rotation of the object with the zero value in the geometric centre of the object.

6. The method for the contactless measurement of geometric objects, in particular raw tires and drums for tire production according to claim 1, **characterized in that** the individual contours of the object are obtained in numbers which are a multiple of two to the n^{th}, the distance between the individual sections being half the size of the smallest searched error of the measured object.

7. A device for the contactless measurement of geometric objects, in particular raw tires and drums for the production of tires according to the preceding claims, **characterized in that** it comprises a contrasting background (2) and at least one camera (6) which has a contour the object to be measured, in particular the raw tire (1) or the drum (8) for the production of tires in its field of view (7).

8. The device for the contactless measurement of geometric objects, in particular raw tires and drums for the production of tires according to claim 7, **characterized in that** the contrasting background (2) is provided with a planar light source (3).

9. The device for the contactless measurement of geometric objects, in particular raw tires and drums for the production of tires according to claim 7, **characterized in that** the contrasting background (2) is an indirectly illuminated bright surface.

10. The device for the contactless measurement of geometric objects, in particular raw tires and drums for the production of tires according to claim 9, **characterized in that** the contrasting background (2) is formed by at least two illumination segments.

11. The device for the contactless measurement of geometric objects, in particular raw tires and drums for the production of tires according to claim 10, **characterized in that** the individual illumination segments are mounted in a contrasting background separately and pivotally about a longitudinal axis.

12. The device for the contactless measurement of geometric objects, in particular raw tires and drums for the production of tires according to claim 7, **characterized in that** the contrasting background (2) is the area of the reflective material.

13. The device for the contactless measurement of geometric objects, in particular raw tires and drums for tire production according to claim 7, **characterized in that** the contour of the measured object is located in the field of view (7) of the camera (6) between the camera (6) and the contrasting background (2).

14. The device for the contactless measurement of geometric objects, in particular raw tires and drums for tire production according to claim 7, **characterized in that** at least one reference mark (5) is arranged on the contrasting background (2), which together with the contour of the object, in particular the raw tires (1) or the drum (8) of the tire building machine are located in the field of view (7) of at least one camera (6).

15. The device for the contactless measurement of geometric objects, in particular raw tires and drums for the production of tires according to claim 14, **characterized in that** a plurality of reference marks (5) form a calibration ruler (4) which is located on the contrasting background (2).
